# EUROPEAN PATENT SPECIFICATION

(11) **EP 2 069 417 B1**
(45) Date of publication and mention of the grant of the patent: **12.12.2012**
(21) Application number: 07842659.0
(22) Date of filing: 18.09.2007
(51) Int. Cl.: C08G 18/36, C08G 18/48, C08G 18/50

(54) **POLYURETHANE FOAMS MADE FROM HYDROXYMETHYL-CONTAINING POLYESTER POLYOLS AND TERTIARY AMINE-CONTAINING POLYOLS**
POLYURETHAN-SCHAUMSTOFFE AUS HYDROXYMETHYL-HALTIGEN POLYESTERPOLYOLEN UND TERTIÄRAMIN-HALTIGEN POLYOLEN
MOUSSES DE POLYURÉTHANE PRODUITES À PARTIR DE POLYOLS POLYESTERS CONTENANT DES HYDROXYMÉTHYLES ET DE POLYOLS CONTENANT DES AMINES TERTIAIRES

(30) Priority: 25.09.2006 US 846936 P
(43) Date of publication of application: 17.06.2009
(73) Proprietor: Dow Global Technologies LLC, Midland, MI 48674 (US)
(72) Inventor: PRANGE, Robbyn, Plainfield, NJ 07060 (US); SONNENSCHEIN, Mark, Midland, MI 48640 (US); BABB, David, Lake Jackson, TX 77566 (US); SCHROCK, Alan, Lake Jackson, TX 77566 (US)
(74) Representative: Raynor, John
(86) International application number: PCT/US2007/078719
(87) International publication number: WO 2008/039657

(56) References cited:
- WO-A-03/016373
- WO-A-2004/096882
- WO-A-2004/096883
- WO-A-2007/111834
- KHOE T H ET AL: "POLYURETHANE FOAMS FROM HYDROXYMETHYLATED FATTY DIETHANOLAMIDES" JOURNAL OF THE AMERICAN OIL CHEMISTS' SOCIETY, AOCS PRESS, CHAMPAIGN, IL, US, vol. 50, 1973, pages 331-333, XP009075832 ISSN: 0003-021X

## Description

The invention relates to flexible polyurethane foams prepared from hydroxymethyl-containing polyester polyols.

WO 04/096882 and WO 04/096883 describe certain polyester polyols that contain hydroxymethyl groups. These polyols are derived from animal fats or vegetable oils through a multi-step process, in which the starting fat or oil is transesterified, hydroxyformylated, reduced, and reacted with an initiator compound. The hydroxymethyl-containing polyester polyols are useful starting materials in the production of flexible polyurethane foams.

It has been found that slabstock foam made using these hydroxymethyl-containing polyester polyols sometimes exhibit lower resiliency than do conventional polyurethane foams that are made using polyether polyols. In some cases, tensile strength, tear strength and elongation may be lower as well.

It would be desirable to provide a means by which the resiliency, tensile strength, tear strength and/or elongation of flexible polyurethane foams made from the hydroxymethyl-containing polyester polyols could be improved.

This invention is in one aspect a method of preparing a polyurethane foam comprising bringing an organic polyisocyanate into contact with a polyol composition containing a mixture of high equivalent weight polyols, in the presence of a blowing agent and a surfactant, under conditions such that the polyisocyanate reacts with the polyol composition and the blowing agent produces a gas, to form a cellular polyurethane and/or polyurea polymer, wherein (1) at least 10% by weight of the high equivalent weight polyol(s) is one or more hydroxymethyl-containing polyester polyols prepared by reacting a hydroxymethyl group-containing fatty acid having from 12 to 26 carbon atoms, or an ester of such a hydroxymethyl group-containing fatty acid, with a polyol or polyamine initiator compound having an average of at least 2 hydroxyl, primary amine and/or secondary amine groups, such that the hydroxymethyl-containing polyester polyol contains an average of at least 1.3 repeating units derived from the hydroxymethyl group-containing fatty acid or ester per total number of hydroxyl, primary amine and secondary amine groups on the initiator compound, and the hydroxymethyl-containing polyester polyol has an equivalent weight of at least 400 up to 15,000 and (2) at least 3% by weight of the high equivalent weight polyols is at least one polyether or polyester polyol containing at least one tertiary amine group.

The use of the tertiary-amine containing polyol often provides improvements in resiliency, tensile strength, tear strength and/or elongation, at equivalent density.

The polyol component contains one or more high equivalent weight polyols. By "high equivalent weight polyol", it is meant a polyol having an atomic mass of at least 400 times the total number of hydroxyl, primary amine and secondary amine groups on the polyol molecule. At least 10 weight percent of the high equivalent weight polyols are constituted by one or more hydroxymethyl-containing polyols.

The hydroxymethyl-containing polyester polyol has an average of at least 2, preferably at least 2.5, more preferably at least 2.8, to about 12, more preferably to about 6, even more preferably to about 5, hydroxyl, primary and secondary amine groups combined per molecule. The hydroxymethyl-containing polyester polyol has an equivalent weight of at least 400, such as at least about 600, at least about 650, at least about 700, or at least about 725, to about 15,000, such as to about 6000, to about 3500, up to about 1700, up to about 1300, or to about 1000. Equivalent weight is equal to the number average molecular weight of the molecule divided by the combined number of hydroxyl, primary amine and secondary amine groups.

The hydroxymethyl-containing polyester polyol is conveniently prepared by reacting a hydroxymethyl group-containing fatty acid having from 12 to 26 carbon atoms, or an ester of such a hydroxymethylated fatty acid, with a polyol, hydroxylamine or polyamine initiator compound having an average of at least 2 hydroxyl, primary amine and/or secondary amine groups/molecule. Proportions of starting materials and reaction conditions are selected such that the resulting hydroxymethyl-containing polyester polyol contains an average of at least 1.3 repeating units derived from the hydroxymethyl group containing fatty acid or ester thereof for each hydroxyl, primary amine and secondary amine groups in the initiator compound, and the hydroxymethyl-containing polyester polyol has an equivalent weight of at least 400 up to about 15,000.

The hydroxymethyl-containing polyester polyol advantageously is a mixture of compounds having the following average structure:

[H—X]₍ₙ₋ₚ₎—R—[X—Z]ₚ (I)

wherein R is the residue of an initiator compound having n hydroxyl and/or primary or secondary amine groups, where n is at least two; each X is independently -O-, - NH- or -NR'- in which R' is an inertly substituted alkyl, aryl, cycloalkyl, or aralkyl group, p is a number from 1 to n representing the average number of [X-Z] groups per hydroxymethyl-containing polyester polyol molecule, Z is a linear or branched chain containing one or more A groups, provided that the average number of A groups per molecule is ≥ 1.3 times n, and each A is independently selected from the group consisting of A1, A2, A3, A4 and A5, provided that at least some A groups are A1, A2 or A3. A1 is: 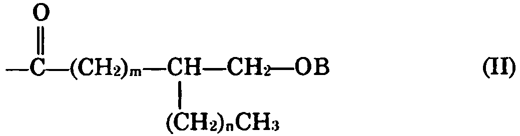 wherein B is H or a covalent bond to a carbonyl carbon atom of another A group; m is number greater than 3, n is greater than or equal to zero and m + n is from 8 to 22, especially from 11 to 19. A2 is: 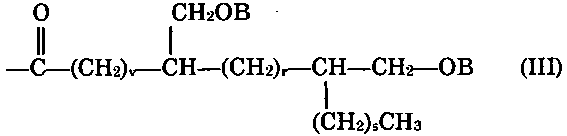 wherein B is as before, v is a number greater than 3, r and s are each numbers greater than or equal to zero with v + r + s being from 6 to 20, especially 10 to 18. A3 is: 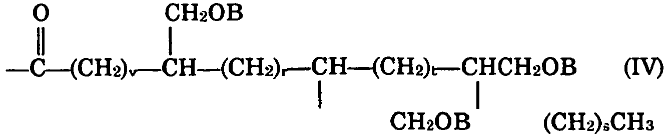 wherein B, v, each r and s are as defined before, t is a number greater than or equal to zero, and the sum of v, r, s and t is from 5 to 19, especially from 10 to 18. A4 is 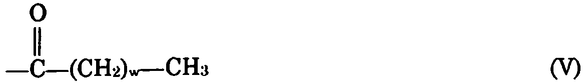 where w is from 10-24, and A5 is 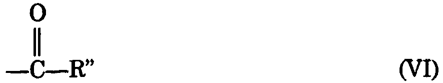 where R" is a linear or branched alkyl group that is substituted with at least one cyclic ether group and optionally one or more hydroxyl groups or other ether groups. The cyclic ether group may be saturated or unsaturated and may contain other inert substitution. The hydroxyl groups may be on the alkyl chain or on the cyclic ether group, or both. The alkyl group may include a second terminal -C(O)- or -C(O)O-group through which it may bond to another initiator molecule. A5 groups in general are lactols, lactones, saturated or unsaturated cyclic ethers or dimers that are formed as impurities during the manufacture of the hydroxymethyl group-containing fatty acid or ester. A5 groups may contain 12-50 carbon atoms.

In formula I, n is preferably from 2 to 8, more preferably from 2 to 6, even more preferably from 2 to 5 and especially from about 3 to 5. Each X is preferably - O-. The total average number of A groups per hydroxymethylated polyol molecule is preferably at least 1.3 times the value of n, such from about 1.3 to about 10 times the value of n, about 1.35 to about 10 times the value of n or from about 1.35 to about 5 times the value of n.

A is preferably A1, a mixture of A1 and A2, a mixture of A1 and A4, a mixture of A1, A2 and A4, a mixture of A1, A2 and A3, or a mixture of A1, A2, A3 and A4, in each case optionally containing a quantity of A5. Mixtures of A1 and A2 preferably contain A1 and A2 groups in a mole ratio of 10:90 to 95:5, particularly from 60:40 to 90:10. Mixtures of A1 and A4 preferably contain A1 and A4 groups in a mole ratio of 99.9:0.1 to 65:35, especially in a ratio of from 99.9:0.1 to 85:15. Mixtures of A1, A2 and A4 preferably contain from about 10 to 95 mole percent A1 groups, 5 to 90 percent A2 groups and up to about 30 percent A4 groups. More preferred mixtures of A1, A2 and A4 contain from 25 to 70 mole-% A1 groups, 15 to 40% A2 groups and up to 30% A4 groups. Mixtures of A1, A2 and A3 preferably contain from about 30 to 80 mole-% A1, from 10 to 60% A2 and from 0.1 to 10% A3 groups. Mixtures of A1, A2, A3 and A4 groups preferably contain from 20 to 70 mole percent A1, 1 to about 65 percent A2, from 0.1 to about 10 percent A3 and up to 30 percent A4 groups. Especially preferred polyester polyols of the invention contain a mixture of from 20 to 70% A1 groups, 20 to 50% A2 groups, 0.5 to 4% A3 groups and 10 to 30% A4 groups. In all cases, A5 groups advantageously constitute from 0-7%, especially from 0-5%, of all A groups.

Preferred mixtures of A groups conveniently contain an average of about 0.8 to about 1.5 -CH₂O- groups/A group, such as from about 0.9 to about 1.3 -CH₂O-groups/A group or from about 0.95 to about 1.2 -CH₂O- groups/A group. Such mixtures of A groups (1) allow the polyester polyol functionality to be governed mainly by the initiator functionality and (2) tend to form less densely branched polyester polyols.

"Inertly substituted" groups are groups that do not react with an isocyanate groups and which do not otherwise engage in side reactions during the preparation of the hydroxymethyl-group containing polyester polyol. Examples of such inert substituents include aryl, cycloalkyl, silyl, halogen (especially fluorine, chlorine or bromine), nitro, ether, ester, and the like.

Hydroxymethyl-containing polyester polyols according to structure I can be prepared in a multi-step process from vegetable or animal fats that contain one or more carbon-carbon double bonds in at least one constituent fatty acid chain. Suitable fats include, for example, chicken fat, canola oil, citrus seed oil, cocoa butter, corn oil, cottonseed oil, lard, linseed oil, oat oil, olive oil, palm oil, peanut oil, rapeseed oil, rice bran oil, safflower oil, sesame oil, soybean oil, sunflower oil, or beef tallow.

The vegetable or animal fat is conveniently first subjected to a transesterification reaction with a lower alkanol, especially methanol or ethanol, to produce alkyl esters of the constituent fatty acids. The resulting alkyl esters may be hydrolyzed to the corresponding fatty acids if desired, but this step is usually not necessary or desirable. The alkyl esters (or fatty acids) are conveniently hydroformylated by reaction with carbon monoxide and hydrogen. This introduces - CHO groups onto the fatty acid chain at the site of carbon-carbon unsaturation. Suitable hydroformylation methods are described in U. S. Patent Nos. 4,731,486 and 4,633,021, for example, and in U.S. Provisional Patent Application 60/465,663, filed April 25, 2003. Some fatty acid groups contain multiple carbon-carbon double bond sites. In such cases, the hydroformylation reaction may not introduce -CHO groups at all of the double bond sites. A subsequent hydrogenation step converts the -CHO groups to hydroxymethyl (-CH₂OH) groups while hydrogenating residual carbon-carbon bonds to remove essentially all carbon-carbon unsaturation. The resulting mixture of hydromethylated fatty acids is then reacted with an initiator compound, with removal of water or lower alkanol to form the polyester polyol.

The initiator contains two or more hydroxyl, primary amine or secondary amine groups, and can be a polyol, an alkanol amine or a polyamine. Initiators of particular interest are polyols. The can include low molecular weight materials having two or more hydroxyl groups, such as glycerine, ethylene glycol, diethylene glycol, triethylene glycol, propylene glycol, dipropylene glycol, tripropylene glycol, trimethylolpropane, sorbitol, sucrose, mannitol, pentaerythritol, cyclohexanedimethanol, and the like. Polyether polyol initiators are useful, including polymers of ethylene oxide and/or propylene oxide having from 2 to 8, especially 2 to 4 hydroxyl groups/molecule and a molecular weight of from about 150 to 3000, especially from 200 to 1000.

Hydroxymethyl-containing fatty acids made in the foregoing process tend to be a mixture of materials having no hydroxymethyl groups, and materials having 1, 2 or 3 hydroxymethyl groups. The proportion of materials having 2 and 3 hydroxymethyl groups is typically somewhat lower than the proportion of starting fatty acids (or alkyl esters) containing 2 and 3 carbon-carbon double bonds, as the hydroformylation reaction often does not take place across all the carbon-carbon double bonds unless stringent reaction conditions are used. Carbon-carbon double bonds that are not hydroformylated generally become hydrogenated.

Methods of making such hydroxymethyl-containing polyester polyols are described in WO 04/096883.

The hydroxymethyl-containing polyester polyol so produced generally contains some unreacted initiator compound, and may contain unreacted hydromethylated fatty acids (or esters). Initiator compounds often react only monofunctionally or difunctionally with the fatty acids (or esters), and resulting polyester polyol often contains free hydroxyl or amino groups bonded directly to the residue of the initiator compound.

The hydroxymethyl-containing polyester polyol may be alkoxylated, if desired, to introduce polyether chains onto one or more of the hydroxymethyl groups. Primary or secondary amine groups can also be introduced by capping the polyester polyol with a diisocyanate, and then converting the terminal isocyanate groups so introduced to amino groups through reaction with water.

The polyol composition used to make the foam further includes at least 3% by weight of one or more additional high equivalent weight polyether or polyester polyol that contains at least one tertiary amine nitrogen group. The tertiary amine nitrogens may be incorporated into the polymer chain, may be present as a pendant group, or both. It is preferred that the additional polyether or polyester contain at least one pendant tertiary amine group/molecule. Polyether polyols of this type are conveniently prepared by polymerizing an alkylene oxide, such as ethylene oxide, propylene oxide, tetramethylene oxide and the like, in the presence of an organic amine initiator compound. The organic amine initiator compound contains at least one primary, secondary or tertiary amine nitrogen group. If the amine initiator compound contains only tertiary amine nitrogen group, it further contains at least one, preferably at least two, other active hydrogen-containing groups such as hydroxyl or thiol.

Suitable organic amine initiator compounds and polyether polyols made therefrom include those described in U. S. Patent Nos. 5,476,969 and 5,672,636; U. S. Published Patent Applications 2003/0100699, 2004/0102535, 2004/0242718 and 2004/0242832; and WO 01/258976. Suitable organic amine initiators include, for example, N,N-dimethyl propylene triamine, 3,3'-diamino-N-methyl dipropylamine, 3,3-diamino-N-ethyl dipropylamine, 2,2'-diamino-N-methyl diethylamine, N-methyl diethanol amine, N-methyl dipropanolamine, N-(2-hydroxyethyl)-N-methyl-1,3-propane diamine; N-(2-hydroxyethyl)-N-methyl-1,2-ethane diamine; N,N'-bis(3-aminopropyl) ethylene diamine; tripropylene tetraamine, tetrapropylene pentamine, N-methyl-1,2-ethane diamine, N-methyl-1,3-propane diamine, N,N-dimethyl-tris(hydroxymethyl)aminomethane, dimethylamino ethanolamine, hydroxyethyl oxazolidine, N-methyl-cyclohexylamine, 3,3'-diamino-N-methyl dipropylamine, 2,2'-diamine-N-methyl diethyl amine, 2,3 diamino-N-methyl ethyl propyl amine, 3,3'-diamino-N-methyldipropylamine, N,N-dimethylaminopropyl amine, bis(N,N-dimethyl-3-aminopropyl)amine, N,N-dimethyl-N'-ethyl ethylene diamine, N,N,2,2-tetramethyl-1,3-propane diamine, 5-amino-1,3-diisopropyl-5-hydroxymethyl hexahydropyrimidine, 2,2-bis (4,5-dimethyl imidazole), 2-ethyl-4-methyl imidazole, 2-phenyl imidazole, 1,5,7-triazabicyclo [4.4.0] dec-5-ene, dicyandiamide, 1,1,3,3-tetarmethyl guanidine, 2-amino-pyrimidine, 3-pyrrolidinol, 2,4-diamino-6-hydroxypryimidine, 1-amino-4-methyl piperazine, 2-amino pyrimidine, 1-(3-aminopropyl) imidazole, 3-quinuclidinol, 3-hydroxymethyl quinuclidine, 7-amino-1,3,5-triazaadamantane, 1-methyl-4-[N-methyl-N[(2-amino-2-methyl propyl)amino] piperadine and 7-(N-(2-nitroisobutylamino))-1,3,5-triazaadamantane.

Polymers of propylene oxide and/or ethylene oxide that contain at least one pendant tertiary amine group are especially preferred tertiary amine-containing polyether polyols.

Suitable tertiary amine-containing polyester polyols also include those described in U. S. Patent No. 5,482,979.

The tertiary amine-containing polyol may constitute from 3 to 90% by weight of the high equivalent weight polyols. It preferably constitutes from 3 to 60% and even more preferably from 5 to 50%, of the weight of the high equivalent weight polyols. In some embodiments, the tertiary amine-containing polyol constitutes from 3 to 25, especially from 3 to 15, weight percent of the high equivalent weight polyol. In other embodiments, it constitutes from 25 to 60%, preferably from 25 to 50% by weight of the high equivalent weight polyols.

One or more additional high equivalent weight polyols may also be present. If present at all, they may constitute from 0.5 to 87%, preferably from 1 to 67% and more preferably from 1 to 50% by weight of the high equivalent weight polyols. In some embodiments, this additional polyol with constitute from 0.5 to 20% by weight, especially from 0.5 to 10% by weight, of the high equivalent weight polyols. In other embodiments, the additional polyol may constitute from 20 to 50, especially from 20 to 45% by weight of the high equivalent weight polyols. Suitable such additional high equivalent weight polyols include polyether polyols and polyester polyols. Polyether polyols include, for example, polymers of propylene oxide, ethylene oxide, 1,2-butylene oxide, tetramethylene oxide, block and/or random copolymers thereof, and the like. Of particular interest are poly(propylene oxide) homopolymers, random copolymers of propylene oxide and ethylene oxide in which the poly(ethylene oxide) content is, for example, from about 1 to about 30% by weight, ethylene oxide-capped poly(propylene oxide) polymers and ethylene oxide-capped random copolymers of propylene oxide and ethylene oxide. For slabstock foam applications, such polyethers preferably contain from 2 to 4, especially from 2 to 3, mainly secondary hydroxyl groups per molecule and have an equivalent weight per hydroxyl group of from about 400 to about 3000, especially from about 800 to about 1750. For high resiliency slabstock and molded foam applications, such polyethers preferably contain from 2 to 4, especially from 2 to 3, mainly primary hydroxyl groups per molecule and have an equivalent weight per hydroxyl group of from about 1000 to about 3000, especially from about 1200 to about 2000. The polyether polyols may contain low terminal unsaturation (for example, less than 0.02 meq/g or less than 0.01 meq/g), such as those made using so-called double metal cyanide (DMC) catalysts, as described for example in US Patent Nos. 3,278,457, 3,278,458, 3,278,459, 3,404,109, 3,427,256, 3,427,334, 3,427,335, 5,470,813 and 5,627,120. Polyester polyols typically contain about 2 hydroxyl groups per molecule and have an equivalent weight per hydroxyl group of from 400 to 1500. Polymer polyols of various sorts may be used as well. Polymer polyols include dispersions of polymer particles, such as polyurea, polyurethane-urea, polystyrene, polyacrylonitrile and polystyrene-co-acrylonitrile polymer particles in a polyol, typically a polyether polyol. Suitable polymer polyols are described in US Patent Nos. 4,581,418 and 4,574,137.

The hydroxymethyl-containing polyester polyol may constitute at least 10%, at least 20%, at least at least 30%, at least 50%, or at least 65% of the total weight of all high equivalent weight polyols. The hydroxymethyl-containing polyester polyol may constitute 75% or more, 85% or more, 90% or more, 95% or more or as much as 97% of the total weight of all high equivalent weight polyols. For example, the hydroxymethyl-containing polyester polyol(s) may constitute from 20 to 65%, from 35 to 65%, from 65 to 97% or from 80 to 97% of the total weight of high equivalent weight polyol(s) in the first aspect of the invention.

The foam formulation may include a catalyst. Because the tertiary amine-containing polyol tends to be autocatalytic, it is often possible to reduce or even eliminate other catalysts from the system. This is particularly true with respect to tertiary amine catalysts which are preferably used in amounts ranging from 0 to 0.1 part by weight per 100 parts by weight of the high equivalent weight polyols. The tertiary amine catalyst may be omitted altogether. Examples of tertiary amine catalysts include: trimethylamine, triethylamine, N-methylmorpholine, N-ethylmorpholine, N,N-dimethylbenzylamine, N,N-dimethylethanolamine, N,N,N',N'-tetramethyl-1,4-butanediamine, N,N-dimethylpiperazine, 1,4-diazobicyclo-2,2,2-octane, bis(dimethylaminoethyl)ether, triethylenediamine and dimethylalkylamines where the alkyl group contains from 4 to 18 carbon atoms. Mixtures of these tertiary amine catalysts are often used.

A wide variety of materials are known to catalyze polyurethane forming reactions, including tertiary amines, tertiary phosphines, various metal chelates, acid metal salts, strong bases, various metal alcoholates and phenolates and metal salts of organic acids. Catalysts of most importance, other than tertiary amines which are preferably used in small quantities or not at all, are organotin catalysts.

Examples of suitably commercially available amine catalysts include Niax™ A1 (bis(dimethylaminoethyl)ether in propylene glycol available from GE OSi Silicones), Niax™ B9 (N,N-dimethylpiperazine and N-N-dimethylhexadecylamine in a polyalkylene oxide polyol, available from GE OSi Silicones), Dabco™ 8264 (a mixture of bis(dimethylaminoethyl)ether, triethylenediamine and dimethylhydroxyethyl amine in dipropylene glycol, available from Air Products and Chemicals), and Dabco™ 33LV (triethylene diamine in dipropylene glycol, available from Air Products and Chemicals), Niax™ A-400 (a proprietary tertiary amine/carboxylic salt and bis (2-dimethylaminoethy)ether in water and a proprietary hydroxyl compound, available from GE OSi Silicones); Niax™ A-300 (a proprietary tertiary amine/carboxylic salt and triethylenediamine in water, available from GE OSi Specialties Co.); Polycat™ 58 (a proprietary amine catalyst available from Air Products and Chemicals), Polycat™ 5 (pentamethyl diethylene triamine, available from Air Products and Chemicals) and Polycat™ 8 (N,N-dimethyl cyclohexylamine, available from Air Products and Chemicals).

Examples of organotin catalysts are stannic chloride, stannous chloride, stannous octoate, stannous oleate, dimethyltin dilaurate, dibutyltin dilaurate, other organotin compounds of the formula SnRₙ(OR)₄₋ₙ, wherein R is alkyl or aryl and n is from 0 to 2, and the like. Commercially available organotin catalysts of interest include Dabco™ T-9 and T-95 catalysts (both stannous octoate compositions available from Air Products and Chemicals). Organotin catalysts are typically used in small amounts, such as from 0.001 to 0.03 parts, preferably 0.05 to 0.015 parts; per 100 parts by weight high equivalent weight polyol(s).

The foam formulation may contain one or more crosslinkers and/or chain extenders in addition to the high equivalent weight polyols described above. If used, suitable amounts of crosslinkers are from about 0.1 to about 1 part by weight, especially from about 0.25 to about 0.5 part by weight, per 100 parts by weight high equivalent weight polyols. Using reduced levels of crosslinkers and chain extenders has been found to facilitate a good "blow off", during which cell walls are broken and a good quality, open-celled flexible foam is produced with little or no need to mechanically open the cells. In slabstock and high resiliency slabstock foam formulations, it is often preferred to essentially eliminate crosslinkers and chain extenders, i.e., use from zero to less than 0.25 parts of crosslinker per 100 parts by weight high equivalent weight polyol. It is most preferred to use no added crosslinker.

For purposes of this invention "crosslinkers" are materials having three or more isocyanate-reactive groups per molecule and an equivalent weight per isocyanate-reactive group of less than 400. Crosslinkers preferably contain from 3 to 8, especially from 3 to 4 hydroxyl, primary amine or secondary amine groups per molecule and have an equivalent weight of from 30 to about 200, especially from 50 to 125. Examples of suitable crosslinkers include diethanol amine, monoethanol amine, triethanol amine, mono- di- or tri(isopropanol) amine, glycerine, trimethylol propane, pentaerythritol, and the like.

For the purposes of this invention, a chain extender is a material having two isocyanate-reactive groups per molecule and an equivalent weight per isocyanate-reactive group of less than 400, especially from 31 to 125. The isocyanate reactive groups are preferably hydroxyl, primary aliphatic or aromatic amine or secondary aliphatic or aromatic amine groups. Representative chain extenders include ethylene glycol, diethylene glycol, 1,2-propylene glycol, dipropylene glycol, tripropylene glycol, ethylene diamine, phenylene diamine, bis(3-chloro-4-aminophenyl)methane and 2,4-diamino-3,5-diethyl toluene. If used, chain extenders are typically present in an amount from about 1 to about 50, especially about 3 to about 25 parts by weight per 100 parts by weight high equivalent weight polyol. Chain extenders are typically omitted from slabstock and high resiliency slabstock foam formulations.

The organic polyisocyanate may be a polymeric polyisocyanate, aromatic isocyanate, cycloaliphatic isocyanate, or aliphatic isocyanate. Exemplary polyisocyanates include m-phenylene diisocyanate, tolulene-2,4-diisocyanate, tolulene-2,6-diisocyanate, hexamethylene-1,6-diisocyanate, tetramethylene-1,4-diisocyanate, cyclohexane-1,4-diisocyanate, hexahydrotoluene diisocyanate, naphthylene-1,5-diisocyanate, methoxyphenyl-2,4-diisocyanate, diphenylmethane-4,4'-diisocyanate, 4,4'-biphenylene diisocyanate, 3,3'-dimethoxy-4,4'-biphenyl diisocyanate, 3,3'-dimethyl-4-4'-biphenyl diisocyanate, 3,3'-dimethyldiphenyl methane-4,4'-diisocyanate, 4,4',4"-triphenyl methane triisocyanate, a polymethylene polyphenylisocyanate (PMDI), toluene-2,4,6-triisocyanate and 4,4'-dimethyldiphenylmethane-2,2',5,5'-tetraisocyanate. Preferably the polyisocyanate is diphenylmethane-4,4'-diisocyanate, diphenylmethane-2,4'-diisocyanate, PMDI, toluene-2-4-diisocyanate, toluene-2-6-diisocyanate or mixtures thereof. Diphenylmethane-4,4'-diisocyanate, diphenylmethane-2,4'-diisocyanate and mixtures thereof are generically referred to as MDI, and all can be used. Toluene-2,4-diisocyanate, toluene-2,6-diisocyanate and mixtures thereof are generically referred to as TDI, and all can be used.

The amount of polyisocyanate used in making polyurethane is commonly expressed in terms of isocyanate index, i.e., 100 times the ratio of NCO groups to isocyanate-reactive groups in the reaction mixture (including those provided by water if used as a blowing agent). In the production of conventional slabstock foam, the isocyanate index typically ranges from about 95 to 140, especially from about 105 to 115. In molded and high resiliency slabstock foam, the isocyanate index typically ranges from about 50 to about 150, especially from about 85 to about 110.

The reaction of the polyisocyanate and the polyol component is conducted in the presence of a blowing agent. Suitable blowing agents include physical blowing agents such as various low-boiling chlorofluorocarbons, fluorocarbons, hydrocarbons and the like. Fluorocarbons and hydrocarbons having low or zero global warming and ozone-depletion potentials are preferred among the physical blowing agents. Chemical blowing agents that decompose or react under the conditions of the polyurethane-forming reaction are also useful. By far the most preferred chemical blowing agent is water, which reacts with isocyanate groups to liberate carbon dioxide and form urea linkages. Water is preferably used as the sole blowing agent, in which case about 1.5 to about 7, especially about 2.5 to 5 parts by weight water are typically used per 100 parts by weight high equivalent weight polyol. Water may also be used in combination with a physical blowing agent, particularly a fluorocarbon or hydrocarbon blowing agent. In addition, a gas such as carbon dioxide, air, nitrogen or argon may be used as the blowing agent in a frothing process.

A surfactant is also used in the foam formulation. A wide variety of silicone surfactants as are commonly used in making polyurethane foams can be used in making the foams of this invention. Examples of such silicone surfactants are commercially available under the tradenames Tegostab™ (Th. Goldschmidt and Co.), Niax™ (GE OSi Silicones) and DabCo™ (Air Products and Chemicals). As discussed in more detail below, certain types of silicone surfactants may perform better than others in specific foam formulations that contain a high proportion of the hydroxymethylated polyol. Moreover, the optimal surfactant for use in this invention is sometimes different than that commonly used to make similar types of polyurethane foams using conventional polyether or polyester polyols. The amount of surfactant used will vary somewhat according to the particular application and surfactant that is used, but in general will be between 0.1 and 6 parts by weight per 100 parts by weight high equivalent weight polyol.

In addition to the foregoing components, the foam formulation may contain various other optional ingredients such as cell openers; fillers such as calcium carbonate; pigments and/or colorants such as titanium dioxide, iron oxide, chromium oxide, azo/diazo dyes, phthalocyanines, dioxazines and carbon black; reinforcing agents such as fiber glass, carbon fibers, flaked glass, mica, talc and the like; biocides; preservatives; antioxidants; flame retardants; and the like.

In general, the polyurethane foam is prepared by mixing the polyisocyanate and polyol composition in the presence of the blowing agent, surfactant, catalyst(s) and other optional ingredients as desired, under conditions such that the polyisocyanate and polyol composition react to form a polyurethane and/or polyurea polymer while the blowing agent generates a gas that expands the reacting mixture. The foam may be formed by the so-called prepolymer method (as described in U.S. Pat. No. 4,390,645, for example), in which a stoichiometric excess of the polyisocyanate is first reacted with the high equivalent weight polyol(s) to form a prepolymer, which is in a second step reacted with a chain extender and/or water to form the desired foam. Frothing methods (as described in U.S. Pat. Nos. 3,755,212; 3,849,156 and 3,821,130, for example), are also suitable. So-called one-shot methods (such as described in U.S. Pat. No. 2,866,744) are preferred. In such one-shot methods, the polyisocyanate and all polyisocyanate-reactive components are simultaneously brought together and caused to react. Three widely used one-shot methods which are suitable for use in this invention include slabstock foam processes, high resiliency slabstock foam processes, and molded foam methods.

Slabstock foam is conveniently prepared by mixing the foam ingredients and dispensing them into a trough or other region where the reaction mixture reacts, rises freely against the atmosphere (sometimes under a film or other flexible covering) and cures. In common commercial scale slabstock foam production, the foam ingredients (or various mixtures thereof) are pumped independently to a mixing head where they are mixed and dispensed onto a conveyor that is lined with paper or plastic. Foaming and curing occurs on the conveyor to form a foam bun. The resulting foams are typically from about 1 to about 5 pounds per cubic foot (pcf) (16-80 kg/m³) in density, especially from about 1.1 to about 2.0 pcf (17.6-32 **kg/m³).**

A preferred slabstock foam formulation according to the invention uses water as the primary or more preferably sole blowing agent, and produces a foam having a density of about 1.1 to about 2.0 pcf (17.6-32 kg/m³), especially about 1.1 to about 1.8 pcf (17.6-28.8 kg/m³). To obtain such densities, about 3 to about 6, preferably about 3.35 to about 5 parts by weight water are used per 100 parts by weight high equivalent weight polyol.

It has been found that in high water slabstock foam formulations such as these, in which the hydroxymethylated polyol constitutes greater than 50%, especially from 80 to 100% of the total weight of high equivalent weight polyols, the foam often tends to have a course cell structure. This problem can be overcome using particular types of silicone surfactants. A preferred type of silicone surfactant for these slabstock foam formulations has a siloxane backbone containing a mixture of high atomic mass polyoxyalkylene pendant groups that have an average atomic mass of from about 1400 to about 6000. The silicone backbone preferably also contains low atomic mass polyoxyalkylene pendant groups having an average atomic mass of from about 300 to about 750. It is more preferred that the silicone backbone contains both high and low atomic mass polyoxyalkylene pendant groups which, taken together, have an average atomic mass of from 100 to 2000, especially from 1100 to 1800. The silicone surfactant preferably contains from 45 to 360, especially from 90 to 260, silicone repeating units/molecule. Preferably, from 6 to 30% of such silicon repeating units contain a pendant high or low atomic mass polyoxyalkylene group. Surfactants of these types are described, for example, in US 5,145,879 and EP 0 712 884 B1. From 1 to 6, preferably from about 2 to 4 parts by weight of such surfactants are suitably used per 100 parts by weight high equivalent weight polyols.

The preferred silicone surfactants for these high water/high hydroxymethylated polyol slabstock foam applications can be represented by the formula MDₓD'_{y}M, wherein
each M is independently (CH₃)₃SiO_{1/2} or R(CH₃)₂SiO_{1/2};
D is (CH₃)₂SiO_{1/2};
D' is R(CH₃)SiO_{2/2};
x is 40 to 220, especially 85 to 220
y is 5 to 40, especially 8 to 40, with x/y<10; and
each R is independently a high atomic mass polyether group or a low atomic mass polyether group, provided that a sufficient number of R groups are high atomic mass polyether groups that the average atomic mass of all polyether groups is at least 1000, especially at least 1100. High atomic mass polyether groups R preferably have the structure -(CH₂)ₙ(C₂H₄O)ₐ(CH₂CH(CH₃)O)_{b}R', in which n is about 3 to 10, a and b are such that that ethylene oxide residues (i.e., -C₂H₄O- groups) constitute from 30 to 100%, especially from 30 to 50% by weight of the R group and the atomic mass of the R group is from 1400 to 6000, especially from 3500 to 5000, and R' is hydrogen, alkyl, -C(O)R", -C(O)OR", or -C(O)NHR", where R" is a monofunctional alkyl or aryl group. Low atomic mass polyether groups R preferably have the structure - (CH₂)ₙ(C₂H₄O)ₐ(CH₂CH(CH₃)O)_{b}R', in which n is about 3 to 10, a and b are such that that ethylene oxide residues (i.e., -C₂H₄O- groups) constitute from 30 to 100% by weight of the R group, the atomic mass of the R group is from 300 to 750, and R' is as defined before.

Those surfactants in which x and y are particularly high (such as an x value of 85 or more and a y value of 8 or more in the structure above) tend to have very high viscosities and therefore may mix poorly into the remaining components of the foam formulation. This problem can be overcome by thinning the surfactant with a diluent such as an aliphatic hydrocarbon, aromatic hydrocarbon, ethoxylated phenol, alkylene benzene, polyether polyol, dipropylene glycol, and the like. Sufficient diluent is preferably used to bring the viscosity of the surfactant blend to below 3000 cP at 25°C.

Silicone surfactants of particular interest in high water, high hydroxymethylated slabstock foam formulations are Niax™ L-626, Niax™ L-598, Niax™ L-703 and Niax™ L-5614 surfactants, all available from GE OSi Silicones, as well as Tegostab™ BF-2370 surfactant, available from Degussa. These materials are high molecular weight silicone surfactant/diluent blends.

High resiliency slabstock (HR slabstock) foam is made in methods similar to those used to make conventional slabstock foam. HR slabstock foams are characterized in exhibiting a Bashore rebound score of 55% or higher, per ASTM 3574-95. These foams tend to be prepared using somewhat higher catalyst levels, compared to conventional slabstock foams, to reduce energy requirements to cure the foam. HR slabstock foam formulations blown only with water tend to use lower levels of water than do conventional slabstock formulations and thus produce slightly higher density foams. Water levels tend to be from about 2.5 to about 3.5, especially from about 2.5 to about 3 parts per 100 parts high equivalent weight polyols. Foam densities are typically from about 2 to about 5 pcf (32-80 kg/m³), especially from about 2.1 to about 3 pcf (33.6-48 kg/m³).

It has been found that silicone surfactants as are commonly employed in conventional HR slabstock foam formulations usually can also be used in HR slabstock foam formulations using the hydroxymethylated polyol of the invention. This is the case even in water-blown formulations containing high levels (80-100% by weight of all polyols) of hydroxymethylated polyols. Suitable such surfactants include polysiloxane polymers having terminal or pendant polyether groups. A suitable class of polysiloxane polymers includes those that contain up to about 20 siloxane units (substituted or unsubstituted) per molecule. Such polysiloxane polymers preferably contain about one pendant polyether group per every 3 to 8 siloxane units. The pendant polyether groups preferably have an average atomic mass of from 200 to 1000. The pendant polyether groups are preferably polymers of ethylene oxide, propylene oxide or a mixture of ethylene oxide and propylene oxide. Examples of commercially available HR foam surfactants that are useful include Dabco™ DC2585, Dabco™ DC5043 and Dabco™ DC5180 surfactants, available from Air Products, Niax™ U-2000 surfactant, available from GE OSi Silicones, and Tegostab™ B 8681, Tegostab™ B4351, Tegostab™ B8631, Tegostab™ B8707 and Tegostab B8715 surfactants, available from Th. Goldschmidt.

Molded foam can be made according to the invention by transferring the reactants (polyol composition including hydroxymethyl-containing polyester polyol, polyisocyanate, blowing agent, and surfactant) to a closed mold where the foaming reaction takes place to produce a shaped foam. Either a so-called "cold-molding" process, in which the mold is not preheated significantly above ambient temperatures, or a "hot-molding" process, in which the mold is heated to drive the cure, can be used. Cold-molding processes are preferred to produce high resiliency molded foam. Densities for molded foams tend to be in the range of 2.0 to about 5.0 pounds per cubic foot (32-80 kg/m³).

Foam in accordance with the invention can also be made via a mechanical frothing process. In such processes, air, nitrogen or other gas is whipped into a reacting mixture containing the high equivalent weight polyol(s), a polyisocyanate, and optionally catalysts, surfactants as described before, crosslinkers, chain extenders and other components. The frothed reaction mixture is then typically applied to a substrate where it is permitted to cure to form an adherent cellular layer. A frothing application of particular importance is the formation of floor coverings such as carpet with an attached polyurethane cushion. Such textile-backing processes are described, for example, in U. S. Patent Nos. 6,372,810 and 5,908,701.

The presence of the tertiary amine-containing high equivalent weight polyol has been found to help improve resiliency, tensile strength, tear strength and/or elongation of the foam, compared to similar foams made without the tertiary amine-containing polyol, but using the hydroxymethyl group-containing polyol. Improvements in resiliency are often seen.

The foam of the invention is useful as furniture cushioning, automotive seating, automotive dashboards, packaging applications, other cushioning and energy management applications, floor covering and carpet backing, gasketing, and other applications for which conventional polyurethane foams are used.

The following examples are provided to illustrate the invention, but are not intended to limit the scope thereof. All parts and percentages are by weight unless otherwise indicated.

### Examples 1-3 and Comparative Samples A and B

Flexible slabstock polyurethane "box" foam Examples 1-3 are made on a commercial scale foam line, from the polyurethane formulations set forth in Table 1.

Hydroxymethyl-Containing Polyester Polyol A is made by reacting 9,(10)-hydroxymethylstearate (prepared by hydroformylating and reducing methyl oleate) with a 625 molecular weight, poly(ethylene oxide) triol at a 6.51:1 molar ratio, using 1012 ppm stannous octoate (City Chemical Co.) as the catalyst. The resulting polyester has a viscosity of 2920 cP at 25°C and a hydroxyl equivalent weight (by end group analysis) of 850. Mₙ and M_{w} are measured after removing unreacted starting materials (mainly initiator compound) from the polyester polyol. The polyester has an Mₙ of 3118, an Mw of 5295, and a polydispersity of 1.7. Hydroxymethyl-Containing Polyester Polyol A has an average of approximately 3.67 hydroxyl groups/molecule. Its structure corresponds to structure I, wherein X is -O- and the A groups are A1 groups in which m is 7 or 8 and n is 8 or 7. The polyester contains an average of about 7.9 A groups/polyester molecule.

Polyurethane foam Example 1 is prepared using the following general procedure. The foams are submitted for physical property assessment using ASTM test method designation D 3574-95, with results as indicated in Table 1. Properties are measured on samples obtained from the center of the foam bun. Comparative Sample A is made in the same manner, using a foam formulation as set forth in Table 1:

**Table 1**

| **Component** | Ex. 1 | Ex. 2 | Ex. 3 | Comp. Sample A* | Comp. Sample B* |
|---|---|---|---|---|---|
| Polvether Polyol A¹ | 44 pbw | 44 pbw | 44 pbw | 50 pbw | 50 pbw |
| Hydroxymethyl-Containing Polyester Polyol A | 50 pbw | 50 pbw | 50 pbw | 50 pbw | 50 pbw |
| Tertiary Amine-Containing Polyol A² | 6 pbw | 6 pbw | 6.6 pbw | 0 pbw | 0 pbw |
| Water | 3.35 | 3.35 | 3.35 | 3.35 | 3.35 |
| Silicone Surfactant A³ | 0.6 | 0.8 | 0.9 | 0 | 0 |
| Silicone Surfactant B⁴ | 0 | 0 | 0 | 1.0 | 1.0 |
| Tertiary Amine Catalyst⁵ | 0 | 0 | 0.02 | 0.07 | 0.07 |
| Organotin Catalyst A⁶ | 0.1 | 0.1 | 0.1 | 0.13 | 0.13 |
| 80/20 TDI⁷ (index) | 108 | 108 | 108 | 108 | 108 |

| **Properties** | | | | | |
|---|---|---|---|---|---|
| Density, kg/m³ | 25.3 | 25.7 | 25.4 | 24.6 | 24.7 |
| Elongation to Break, % | 168 | 162 | 185 | 167 | 167 |
| Tensile Strength, kPa | 110 | 102 | 98 | 91 | 85 |
| Tear Strength, N/m | 612 | 517 | 453 | 432 | 447 |
| Resiliency, % | 38 | 40.0 | 39.3 | 36 | 36.3 |
| 90% Compression Set, % | 7.6 | 8.0 | 7.7 | 6.6 | 5.7 |
| 50% Compression Set, % | 3.6 | 4.5 | 3.4 | 3.2 | 3.1 |
| 50% CFD (kPa) | 3.4 | 3.6 | 3.1 | 3.0 | 3.0 |
| 25% IFD (N) | 108 | 116 | 105 | 104 | 104 |
| 40% IFD (N) | 136 | 143 | 128 | 124 | 123 |
| 65% IFD (N) | 254 | 264 | 223 | 229 | 223 |
| Comfort Factor | 2.34 | 2.3 | 2.1 | 2.2 | 2.1 |
| Air Flow, ft³/min (L/min) | 2.46 | 2.7 | 1.4 | 2.67 | 2.7 |
| Cell count | 13/14 | N.D. | N.D. | 12/13 | N.D. |

| | | | | | |
|---|---|---|---|---|---|
| * Not an example of the invention. Comparative Samples A and B represent duplicate samples. ¹An 1168 equivalent weight, nominally trifunctional random copolymer of 87.7% by weight propylene oxide and 12.3% ethylene oxide. ²An 1000 equivalent weight bis-(3-dimethylaminopropyl)amine-initiated polyether having internal poly(propylene oxide) blocks and external random propylene oxide/ethylene oxide interpolymer blocks. ³An organosilicone surfactant sold commercially by Air Products and Chemicals as Niax® L-620 surfactant. ⁴An organosilicone surfactant sold commercially by Air Products and Chemicals as Niax® L-703 surfactant. ⁵Bis(dimethylaminoethyl)ether, available commercially from Air Products and Chemicals as Niax® A-99 catalyst. ⁶Stannous octoate. ⁷An 80/20 by weight mixture of the 2,4- and 2,6-isomers of toluene diisocyanate. | | | | | |

Foam Examples 1-3 exhibit significantly increased tensile and tear strengths without sacrificing elongation, and a significant improvement in resiliency, compared to Comparative Samples A and B. Foam Examples 1 and 2 also exhibit higher load bearing and comfort factor, at approximately the same density.

## Claims

1. A method of preparing a polyurethane foam comprising bringing an organic olyisocyanate into contact with a polyol composition containing a mixture of polyols having an equivalent weight of at least 400, in the presence of a blowing agent and a silicone surfactant, under conditions such that the polyisocyanate reacts with the polyol composition and the blowing agent produces a gas, to form a cellular polyurethane and/or polyurea polymer, wherein (1) at least 10% by weight of the high equivalent weight polyol(s) is one or more hydroxymethyl-containing polyester polyols prepared by reacting a hydroxymethyl group-containing fatty acid having from 12 to 26 carbon atoms, or an ester of such a hydroxymethyl group-containing fatty acid, with a polyol or polyamine initiator compound having an average of at least 2 hydroxyl, primary amine and/or secondary amine groups, such that the hydroxymethyl-containing polyester polyol contains an average of at least 1.3 repeating units derived from the hydroxymethyl group-containing fatty acid or ester per total number of hydroxyl, primary amine and secondary amine groups on the initiator compound, and the hydroxymethyl-containing polyester polyol has an equivalent weight of at least 400 up to 15,000 and (2) at least 3% by weight of the high equivalent weight polyols is at least one polyether or polyester polyol containing at least one tertiary amine group.

2. The method of claim 1, wherein the at least one polyether or polyester polyol containing at least one tertiary amine group is a polyether initiated with N,N-dimethyl propylene triamine, 3,3'-diamino-N-methyl dipropylamine, 3,3-diamino-N-ethyl dipropylamine, 2,2'-diamino-N-methyl diethylamine, N-methyl diethanol amine, N-methyl dipropanolamine, N-(2-hydroxyethyl)-N-methyl-1,3-propane diamine; N-(2-hydroxyethyl)-N-methyl-1,2-ethane diamine; N,N'-bis(3-aminopropyl) ethylene diamine; tripropylene tetraamine, tetrapropylene pentamine, N-methyl-1,2-ethane diamine, N-methyl-1,3-propane diamine, N,N-dimethyl-tris(hydroxymethyl)aminomethane, dimethylamino ethanolamine, hydroxyethyl oxazolidine, N-methyl-cyclohexylamine, 3,3'-diamino-N-methyl dipropylamine, 2,2'-diamine-N-methyl diethyl amine, 2,3 diamino-N-methyl ethyl propyl amine, 3,3'-diamino-N-methyldipropylamine, N,N-dimethylaminopropyl amine, bis(N,N-dimethyl-3-aminopropyl)amine, N,N-dimethyl-N'-ethyl ethylene diamine, N,N,2,2-tetramethyl-1,3-propane diamine, 5-amino-1,3-diisopropyl-5-hydroxymethyl hexahydropyrimidine, 2,2-bis (4,5-dimethyl imidazole), 2-ethyl-4-methyl imidazole, 2-phenyl imidazole, 1,5,7-triazabicyclo [4.4.0] dec-5-ene, dicyandiamide, 1,1,3,3-tetramethyl guanidine, 2-amino-pyrimidine, 3-pyrrolidinol, 2,4-diamino-6-hydroxypryimidine, 1-amino-4-methyl piperazine, 2-amino pyrimidine, 1-(3-aminopropyl) imidazole, 3-quinuclidinol, 3-hydroxymethyl quinuclidine, 7-amino-1,3,5-triazaadamantane, 1-methyl-4-[N-methyl-N[(2-amino-2-methyl propyl)amino] piperadine, 7-(N-(2-nitroisobutylamino))-1,3,5-triazaadamantane, or a mixture of two or more thereof.

3. The method of claim 2, wherein the least one polyether or polyester polyol containing at least one tertiary amine group contains an average of at least one pendant tertiary amino group per molecule.

4. The method of claim 2, wherein the at least one polyether or polyester polyol containing at least one tertiary amine group constitutes from 3 to 60 weight percent of the high equivalent weight polyols.

5. The method of claim 4, wherein the at least one polyether or polyester polyol containing at least one tertiary amine group constitutes from 3 to 25 weight percent of the high equivalent weight polyols.

6. The method of claim 2, wherein the hydroxymethyl group-containing polyester polyol is represented by the average structure:
[H—X]₍ₙ₋ₚ₎—R—[X—Z]ₚ (I)
wherein R is the residue of an initiator compound having n hydroxyl and/or primary or secondary amine groups, where n is at least two; each X is independently -O-, -NH- or -NR'- in which R' is an inertly substituted alkyl, aryl, cycloalkyl, or aralkyl group, p is a number from 1 to n representing the average number of [X-Z] groups per hydroxymethyl-containing polyester polyol molecule, Z is a linear or branched chain containing one or more A groups, provided that the average number of A groups per molecule is ≥ 1.3 times n, and each A is independently selected from the group consisting of A1, A2, A3, A4 and A5, provided that at least some A groups are A1, A2 or A3, further wherein A1 is: 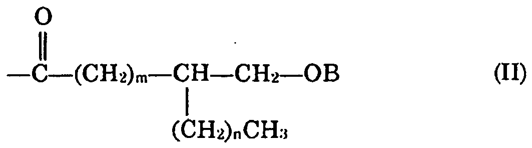 wherein B is H or a covalent bond to a carbonyl carbon atom of another A group; m is number greater than 3, n is greater than or equal to zero and m + n is from 8 to 22; A2 is: 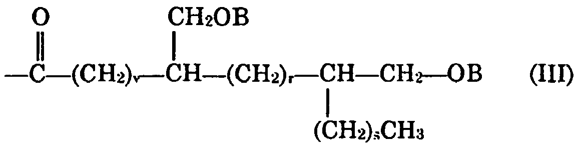 wherein B is as before, v is a number greater than 3, r and s are each numbers greater than or equal to zero with v + r + s being from 6 to 20; A3 is: 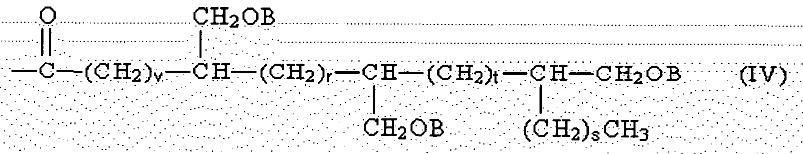 wherein B, v, each r and s are as defined before, t is a number greater than or equal to zero, and the sum of v, r, s and t is from 5 to 19; A4 is 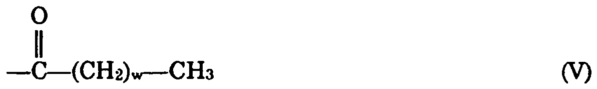 where w is from 10 to 24, and A5 is 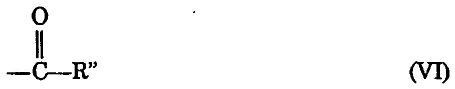 where R" is a linear or branched alkyl group that is substituted with at least one cyclic ether group.

7. The method of claim 6 wherein the number of A groups per hydroxymethyl group containing polyester polyol molecule is from 1.3 to 10 times n.

8. The method of claim 7 wherein the A groups contain an average of 0.9 to 1.3 - CH₂O- groups/A group.

9. The method of claim 1 which is a slabstock foam method.

10. The method of claim 3 which is a slabstock foam method.

11. The method of claim 8 which is a slabstock foam method.

12. The method of claim 1 wherein the blowing agent includes water.

13. The method of claim 9 wherein the blowing agent includes water.

14. The method of claim 10 or claim 11 wherein the blowing agent includes water.

15. A foam made in accordance with the method of any foregoing claim.

## Patentansprüche

1. Verfahren zur Herstellung eines Polyurethan-Schaumstoffs, bei dem ein organisches Polyisocyanat mit einer Polyolzusammensetzung, die eine Mischung von Polyolen mit einem Äquivalentgewicht von mindestens 400 enthält, in Gegenwart eines Treibmittels und eines Silicontensids unter solchen Bedingungen in Kontakt gebracht wird, dass das Polyisocyanat mit der Polyolzusammensetzung reagiert und das Treibmittel ein Gas erzeugt, um ein zelliges Polyurethan- und/oder Polyharnstoffpolymer zu bilden, wobei (1) mindestens 10 Gew.-% des oder der Polyole mit hohem Äquivalentgewicht ein oder mehrere hydroxymethylhaltige Polyesterpolyole sind, die hergestellt sind durch Umsetzen einer Hydroxymethylgruppen enthaltenden Fettsäure mit 12 bis 26 Kohlenstoffatomen, oder eines Esters einer solchen Hydroxymethylgruppen enthaltenden Fettsäure, mit einer Polyol- oder Polyamin-Initiatorverbindung mit einem Durchschnitt von mindestens 2 Hydroxyl-, primären Amin- und/oder sekundären Amingruppen, so dass das hydroxymethylhaltige Polyesterpolyol einen Durchschnitt von mindestens 1,3 Grundeinheiten, die von der Hydroxymethylgruppen enthaltenden Fettsäure oder dem Ester hergeleitet sind, pro Gesamtzahl an Hydroxyl-, primären Amin- und sekundären Amingruppen an der Initiatorverbindung enthält, und das hydroxymethylhaltige Polyesterpolyol ein Äquivalentgewicht von mindestens 400 bis 15.000 hat und (2) mindestens 3 Gew.-% der Polyole mit hohem Äquivalentgewicht mindestens ein Polyether- oder Polyesterpolyol sind, das mindestens eine tertiäre Amingruppe enthält.

2. Verfahren nach Anspruch 1, wobei das mindestens eine Polyether- oder Polyesterpolyol, das mindestens eine tertiäre Amingruppe enthält, ein Polyether ist, der mit N,N-Dimethylpropylentriamin, 3,3'-Diamino-N-methyldipropylamin, 3,3-Diamino-N-ethyldipropylamin, 2,2'-Diamino-N-methyldiethylamin, N-Methyldiethanolamin, N-Methyldipropanolamin, N-(2-Hydroxyethyl)-N-methyl-1,3-propandiamin; N-(2-Hydroxyethyl)-N-methyl-1,2-ethandiamin; N,N'-bis(3-aminopropyl)ethylendiamin; Tripropylentetraamin, Tetrapropylenpentamin, N-Methyl-1,2-ethandiamin, N-Methyl-1,3-propandiamin, N,N-Dimethyl-tris(hydroxymethyl)aminomethan, Dimethylaminoethanolamin, Hydroxyethyloxazolidin, N-Methyl-cyclohexylamin, 3,3'-Diamino-N-methyldipropylamin, 2,2'-Diamin-N-methyldiethylamin, 2,3-Diamino-N-methylethylpropylamin, 3,3'-Diamino-N-methyldipropylamin, N,N-Dimethylaminopropylamin, Bis(N,N-dimethyl-3-aminopropyl)amin, N,N-Dimethyl-N'-ethylethylendiamin, N,N,2,2-Tetramethyl-1,3-propandiamin, 5-Amino-1,3-diisopropyl-5-hydroxymethylhexahydropyrimidin, 2,2-Bis-(4,5-dimethylimidazol), 2-Ethyl-4-methylimidazol, 2-Phenylimidazol, 1,5,7-Triazabicyclo[4.4.0]dec-5-en, Dicyandiamid, 1,1,3,3-Tetramethylguanidin, 2-Amino-pyrimidin, 3-Pyrrolidinol, 2,4-Diamino-6-hydroxypyrimidin, 1-Amino-4-methylpiperazin, 2-Aminopyrimidin, 1-(3-Aminopropyl)imidazol, 3-Chinuclidinol, 3-Hydroxymethylchinuclidin, 7-Amino-1,3,5-Triazaadamantan, 1-Methyl-4-[N-methyl-N[2-amino-2-methylpropyl)amino]piperadin, 7-(N-(2-Nitroisobutylamino))-1,3,5-triazaadamantan oder einer Mischung von zwei oder mehr davon initiiert ist.

3. Verfahren nach Anspruch 2, wobei das mindestens eine Polyether- oder Polyesterpolyol, das mindestens eine tertiäre Amingruppe enthält, einen Durchschnitt von mindestens einer tertiären Aminseitengruppe pro Molekül enthält.

4. Verfahren nach Anspruch 2, wobei das mindestens eine Polyether- oder Polyesterpolyol, das mindestens eine tertiäre Amingruppe enthält, von 3 bis 60 Gew.-% der Polyole mit hohem Äquivalentgewicht ausmacht.

5. Verfahren nach Anspruch 4, wobei das mindestens eine Polyether- oder Polyesterpolyol, das mindestens eine tertiäre Amingruppe enthält, von 3 bis 25 Gew.-% der Polyole mit hohem Äquivalentgewicht ausmacht.

6. Verfahren nach Anspruch 2, wobei das Hydroxymethylgruppen enthaltende Polyesterpolyol durch die folgende durchschnittliche Struktur repräsentiert wird:
[H-X]₍ₙ₋ₚ₎-R-[X-Z]ₚ (I)
worin R der Rest einer Initiatorverbindung mit n Hydroxyl- und/oder primären oder sekundären Amingruppen ist, wo n mindestens zwei ist; jedes X ist unabhängig voneinander —O—, -NH- oder -NR'-, bei dem R' eine inert substituierte Alkyl-, Aryl-, Cycloalkyl- oder Aralkylgruppe ist, p eine Zahl von 1 bis n ist, welche die durchschnittliche Zahl von -[X-Z]-Gruppen pro hydroxymethylhaltigem Polyesterpolyolmolekül repräsentiert, Z eine lineare oder verzweigte Kette ist, die eine oder mehrere A-Gruppen enthält, mit der Maßgabe, dass die durchschnittliche Zahl von A-Gruppen pro Molekül ≥ 1,3 mal n ist, und jedes A unabhängig voneinander ausgewählt ist aus der aus A1, A2, A3, A4 und A5 bestehenden Gruppen, mit der Maßgabe, dass mindestens einige A-Gruppen A1, A2 oder A3 sind, ferner wobei A1 Folgendes ist: 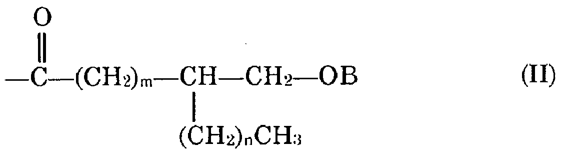 worin B H oder eine kovalente Bindung an ein Carbonylkohlenstoffatom einer anderen A-Gruppe ist; m eine Zahl größer als 3 ist, n größer oder gleich Null ist und m + n von 8 bis 22 beträgt;
A2 ist: 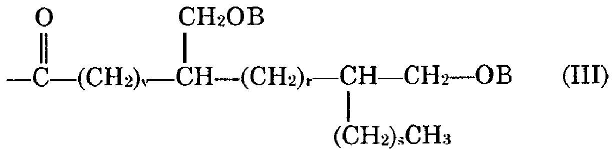 worin B der obigen Definition entspricht, v eine Zahl größer als 3 ist, r und s jeweils Zahlen größer oder gleich Null sind, wobei v + r + s von 6 bis 20 beträgt;
A3 ist: 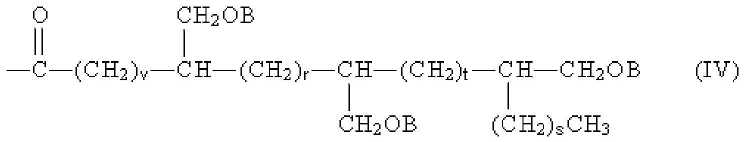 worin B, v, jedes r und s der obigen Definition entsprechen, t eine Zahl größer oder gleich Null ist und die Summe von v, r, s und t von 5 bis 19 beträgt;
A4 ist: 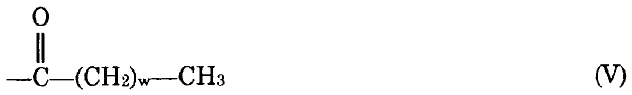 worin w von 10 bis 24 beträgt; und
A5 ist: 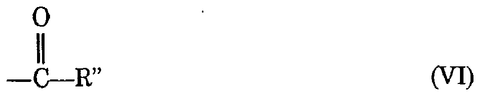 wo R" eine lineare oder verzweigte Alkylgruppe ist, die mit mindestens einer cyclischen Ethergruppe substituiert ist.

7. Verfahren nach Anspruch 6, wobei die Zahl von A-Gruppen pro Hydroxymethylgruppen enthaltendem Polyesterpolyolmolekül von 1,3 bis 10 mal n beträgt.

8. Verfahren nach Anspruch 7, wobei die A-Gruppen einen Durchschnitt von 0,9 bis 1,3 CH₂O-Gruppen pro A-Gruppe enthalten.

9. Verfahren nach Anspruch 1, bei dem es sich um ein Blockschaumverfahren handelt.

10. Verfahren nach Anspruch 3, bei dem es sich um ein Blockschaumverfahren handelt.

11. Verfahren nach Anspruch 8, bei dem es sich um ein Blockschaumverfahren handelt.

12. Verfahren nach Anspruch 1, wobei das Treibmittel Wasser enthält.

13. Verfahren nach Anspruch 9, wobei das Treibmittel Wasser enthält.

14. Verfahren nach Anspruch 10 oder Anspruch 11, wobei das Treibmittel Wasser enthält.

15. Schaumstoff, der nach dem Verfahren gemäß einem der vorhergehenden Ansprüche hergestellt ist.

## Revendications

1. Procédé de fabrication d'une mousse de polyuréthane, comprenant le fait de mettre un polyisocyanate organique en contact avec une composition de polyols contenant un mélange de polyols dotés d'un poids d'équivalent valant au moins 400, en présence d'un agent d'expansion et d'un tensioactif de type silicone, dans des conditions telles que le polyisocyanate réagisse avec la composition de polyols et que l'agent d'expansion génère un gaz, de manière à ce qu'il se forme un polymère de type polyuréthane et/ou polyurée et d'aspect alvéolaire, dans lequel procédé
1) une fraction d'au moins 10 % en poids du ou des polyol(s) à poids d'équivalent élevé est formée d'un ou de plusieurs polyester-polyol(s) hydroxyméthylé(s), préparés par réaction d'un acide gras comportant de 12 à 26 atomes de carbone et un groupe hydroxyméthyle, ou d'un ester d'un tel acide gras à groupe hydroxyméthyle, avec un composé amorceur de type polyol ou polyamine qui comporte en moyenne au moins 2 groupes de type hydroxyle, amino primaire et/ou amino secondaire, de telle manière que le polyester-polyol hydroxyméthylé comporte en moyenne au moins 1,3 fois autant de motifs répétés dérivés de l'acide gras ou de l'ester à groupe hydroxyméthyle que le nombre total de groupes hydroxyle et amino, primaire ou secondaire, présents dans le composé amorceur, et que le polyester-polyol hydroxyméthylé présente un poids d'équivalent qui vaut d'au moins 400 jusqu'à 15 000,
2) et une fraction d'au moins 3 % en poids des polyol(s) à poids d'équivalent élevé est constitué d'au moins un polyéther-polyol ou polyester-polyol comportant au moins un groupe amino tertiaire.

2. Procédé conforme à la revendication 1, dans lequel le polyéther-polyol ou polyester-polyol au nombre d'au moins un, comportant au moins un groupe amino tertiaire, est un polyéther pour lequel l'amorceur était l'un des suivants : N,N-diméthyl-propylène-triamine, 3,3'-diamino-N-méthyl-dipropylamine, 3,3-diamino-N-éthyl-dipropylamine, 2,2'-diamino-N-méthyl-diéthylamine, N-méthyl-diéthanolamine, N-méthyl-dipropanolamine, N-(2-hydroxy-éthyl)-N-méthyl-propane-1,3-diamine, N-(2-hydroxy-éthyl)-N-méthyl-éthane-1,2-diamine, N,N'-bis(3-amino-propyl)-éthylènediamine, tripropylènetétramine, tétrapropylène-pentamine, N-méthyl-éthane-1,2-diamine, N-méthyl-propane-1,3-diamine, N,N-diméthyl-tris(hydroxyméthyl)-amino-méthane, diméthyl-amino-éthanolamine, hydroxyéthyl-oxazolidine, N-méthyl-cyclohexylamine, 3,3'-diamino-N-méthyl-dipropylamine, 2,2'-diamino-N-méthyl-diéthylamine, 2,3-diamino-N-méthyl-éthyl-propyl-amine, 3,3'-diamino-N-méthyl-dipropylamine, N,N-diméthylamino-propylamine, bis(N,N-diméthyl-3-aminopropyl)-amine, N,N-diméthyl-N'-éthyl-éthylènediamine, N,N,2,2-tétraméthyl-propane-1,3-diamine, 5-amino-1,3-diisopropyl-5-hydroxyméthyl-hexahydropyrimidine, 2,2-bis(4,5-diméthyl-imidazole), 2-éthyl-4-méthyl-imidazole, 2-phényl-imidazole, 1,5,7-triazabicyclo[4.4.0]déc-5-ène, dicyandiamide, 1,1,3,3-tétraméthyl-guanidine, 2-amino-pyrimidine, pyrrolidin-3-ol, 2,4-diamino-6-hydroxy-pyrimidine, 1-amino-4-méthyl-pipérazine, 2-amino-pyrimidine, 1-(3-amino-propyl)-imidazole, quinuclidin-3-ol, 3-hydroxyméthyl-quinuclidine, 7-amino-1,3,5-triaza-adamantane, 1-méthyl-4-[N-méthyl-N[(2-amino-2-méthyl-propyl)-amino]-pipéradine, et 7-[N-(2-nitro-isobutyl)-amino]-1,3,5-triaza-adamantane, ou un mélange de deux d'entre eux ou plus.

3. Procédé conforme à la revendication 2, dans lequel le polyéther-polyol ou polyester-polyol au nombre d'au moins un, comportant au moins un groupe amino tertiaire, comporte en moyenne au moins un groupe amino tertiaire pendant par molécule.

4. Procédé conforme à la revendication 2, dans lequel le polyéther-polyol ou polyester-polyol au nombre d'au moins un, comportant au moins un groupe amino tertiaire, représente de 3 à 60 % en poids des polyols à poids d'équivalent élevé.

5. Procédé conforme à la revendication 4, dans lequel le polyéther-polyol ou polyester-polyol au nombre d'au moins un, comportant au moins un groupe amino tertiaire, représente de 3 à 25 % en poids des polyols à poids d'équivalent élevé.

6. Procédé conforme à la revendication 2, dans lequel le polyester-polyol hydroxyméthylé est représenté par la structure moyenne suivante :
[H-X]₍ₙ₋ₚ₎-R-[X-Z]ₚ (I)
dans laquelle
- R représente le résidu d'un composé amorceur comportant n groupes hydroxyle et/ou amino primaire ou secondaire, étant entendu que ce nombre n vaut au moins 2 ;
- chaque symbole X représente indépendamment un chaînon symbolisé par -O-, -NH- ou -NR'- où R' représente un groupe alkyle, aryle, cycloalkyle ou aralkyle, à substituant(s) inerte(s) ;
- p représente un nombre qui vaut de 1 à n et qui est le nombre moyen de groupes de formule [X-Z] par molécule de polyester-polyol hydroxyméthylé ;
- et Z représente une chaîne linéaire ou ramifiée portant un ou plusieurs groupe(s) nommé(s) A, étant entendu que le nombre moyen de groupes A par molécule est égal ou supérieur à 1,3 fois n et que chaque groupe A est choisi, indépendamment, dans l'ensemble formé par les groupes nommés A1, A2, A3, A4 et A5, sous réserve qu'au moins quelques groupes A soient des groupes A1, A2 ou A3 ;
étant entendu que :
- A1 est un groupe de formule 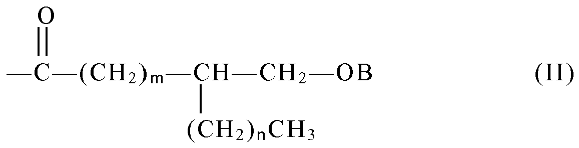 dans laquelle B représente un atome d'hydrogène ou une liaison covalente établie avec l'atome de carbone du groupe carbonyle d'un autre groupe A, l'indice m est un nombre supérieur à 3, l'indice n est supérieur ou égal à 0, et la somme m + n vaut de 8 à 22 ;
- A2 est un groupe de formule 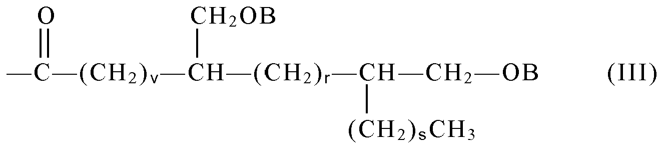 dans laquelle B a la signification indiquée ci-dessus, l'indice v est un nombre supérieur à 3, les indices r et s sont chacun un nombre supérieur ou égal à 0, et la somme v + r + s vaut de 6 à 20 ;
- A3 est un groupe de formule 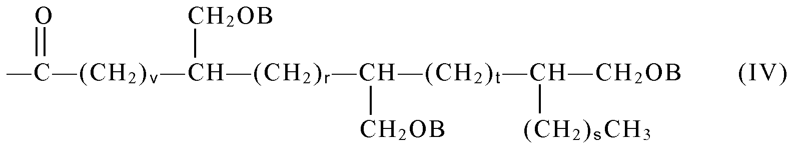 dans laquelle B et les indices v, r et s ont les significations indiquées ci-dessus, l'indice t est un nombre supérieur ou égal à 0, et la somme des indices v, r, s et t vaut de 5 à 19 ;
- A4 est un groupe de formule 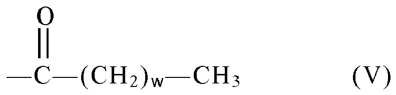 dans laquelle l'indice w vaut de 10 à 24 ;
- et A5 est un groupe de formule 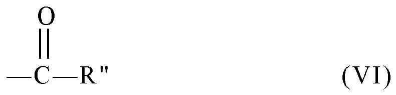 dans laquelle R" représente un groupe alkyle linéaire ou ramifié qui porte, en tant que substituant, au moins un groupe de type éther cyclique.

7. Procédé conforme à la revendication 6, dans lequel le nombre de groupes A par molécule de polyester-polyol hydroxyméthylé vaut de 1,3 à 10 fois le nombre n.

8. Procédé conforme à la revendication 7, dans lequel les groupes A contiennent en moyenne 0,9 à 1,3 fragment CH₂O par groupe A.

9. Procédé conforme à la revendication 1, qui est un procédé de fabrication de mousse en plaque.

10. Procédé conforme à la revendication 3, qui est un procédé de fabrication de mousse en plaque.

11. Procédé conforme à la revendication 8, qui est un procédé de fabrication de mousse en plaque.

12. Procédé conforme à la revendication 1, dans lequel l'agent d'expansion inclut de l'eau.

13. Procédé conforme à la revendication 9, dans lequel l'agent d'expansion inclut de l'eau.

14. Procédé conforme à la revendication 10 ou 11, dans lequel l'agent d'expansion inclut de l'eau.

15. Mousse fabriquée suivant un procédé conforme à l'une des revendications précédentes.
